# EUROPÄISCHE PATENTANMELDUNG

(11) **EP 1 887 045 A2**
(43) Veröffentlichungstag der Anmeldung: **13.02.2008**
(21) Anmeldenummer: 07110686.8
(22) Anmeldetag: 20.06.2007
(51) Int. Cl.: C09B 45/22, C09B 67/22

(54) **Verfahren zur Herstellung von Pigmenten**

(30) Priorität: 13.07.2006 DE 102006032591
(71) Anmelder: LANXESS Deutschland GmbH, 51369 Leverkusen (DE)
(72) Erfinder: Feldhues, Ulrich, 51465, Bergisch Gladbach (DE); Linke, Frank, 51069, Köln (DE); Göbel, Ronald, 51371, Leverkusen (DE)

(57) **Zusammenfassung**

Verfahren zur Herstellung von Pigmenten der Formel (I) 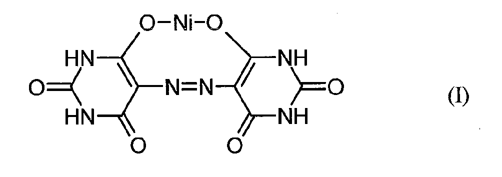 oder tautomerer Strukturen davon sowie ihre Hydrate, die Melamin eingelagert enthalten, dadurch gekennzeichnet, dass man eine Mischung aus dem Azobarbitursäure-mono-Kationsalz (II) und dem Azobarbitursäure-di-Kationsalz (III) mit einer Nickelverbindung und Melamin umsetzt, 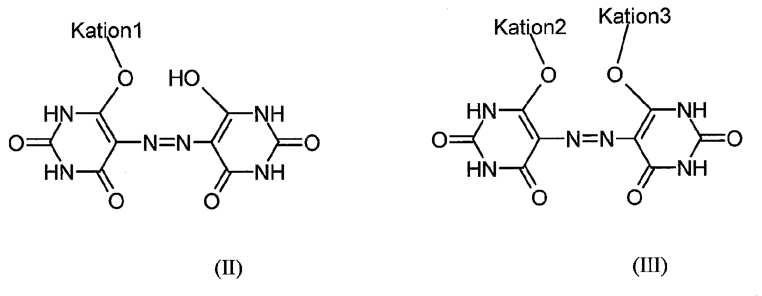 worin Kation1, Kation2 und Kation3 unabhängig voneinander für beliebige einwertige Kationen oder den Anteil eines beliebigen mehrwertigen Kations stehen, der einer positiven Ladung von eins entspricht.

## Beschreibung

Die Erfindung betrifft ein Verfahren zur Herstellung von Melamin eingelagernden Pigmenten, sowie deren Hydrate sowie die Verwendung dieser Verfahrensprodukte.

Es ist bekannt, dass es bei der Herstellung von Azo-Barbitursäure Ni-Komplexen, die Melamin eingelagert enthalten sowie deren Hydrate, zu starken Schwankungen der Produkteigenschaften kommt. Insbesondere unter Produktionsbedingungen im industriellen Maßstab, besonders im Batch-Verfahren unterliegen bestimmte Parameter des erhaltenen Materials, wie z.B. die spezifische Oberfläche nach BET, mehr oder weniger starken Schwankungen. Dies ist natürlich nachteilig, da die Abnehmer der genannten Produkte eine konstante Produktqualität wünschen.

Eine gewisse Vereinheitlichung der Produktqualität (Reproduzierbarkeit) ist möglich durch einen Temperschritt, wie er beispielsweise in der EP-A1-0994162 oder der DE 10328999 A1 beschrieben ist. Das bedeutet natürlich insbesondere im industriellen Maßstab einen zusätzlichen zeitaufwändigen Schritt und damit eine Erhöhung der Fertigungskosten.

EP-A 1 612 246 beschreibt ebenfalls große Qualitätsschwankungen in der Batch-Produktion des Ni-Komplexes nach dem Stand der Technik und schlägt vor, diesen Nachteil durch bestimmte Zusätze in der Synthese zu vermeiden. Das erfordert natürlich einen zusätzlichen logistischen Aufwand und hat Einfluss auf die Produktzusammensetzung, da diese Zusätze ganz oder teilweise in den Ni-Komplex anstelle von Melamin eingelagert werden.

Überraschenderweise wurde nun gefunden, dass man Qualität und Reproduzierbarkeit von dem Azo-Barbitursäure Ni-Komplex, der Melamin eingelagert enthält, deutlich verbessern kann, wenn man eine Mischung aus dem Mono- und dem Di-Kationkomplex, insbesondere dem Mono- und dem Di-Kaliumkomplex der Azobarbitursäure mit einer Nickelverbindung und mit Melamin umsetzt. Die Verbindung der Formel (I), die Melamin eingelagert enthält, lässt sich nach dem erfindungsgemäßen Verfahren auch großtechnisch reproduzierbar mit ansteuerbarer Oberfläche, hoher Farbstärke und sehr enger Partikelgrößenverteilung herstellen. Das ist besonders vorteilhaft für die Erstellung niedrigviskoser stabiler Dispersionen.

Die Erfindung betrifft daher ein Verfahren zur Herstellung von Pigmenten der Formel (I) 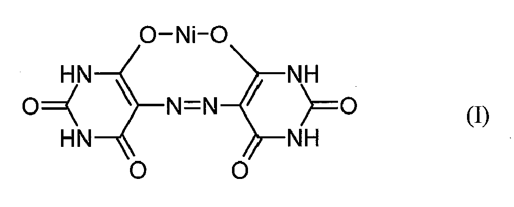 oder tautomerer Strukturen davon sowie ihre Hydrate, die Melamin eingelagert enthalten, das dadurch gekennzeichnet ist, dass man eine Mischung aus dem Mono-Salz der Formel (II) und dem Di-Salz der Formel (III) mit einer Nickelverbindung und Melamin umsetzt, 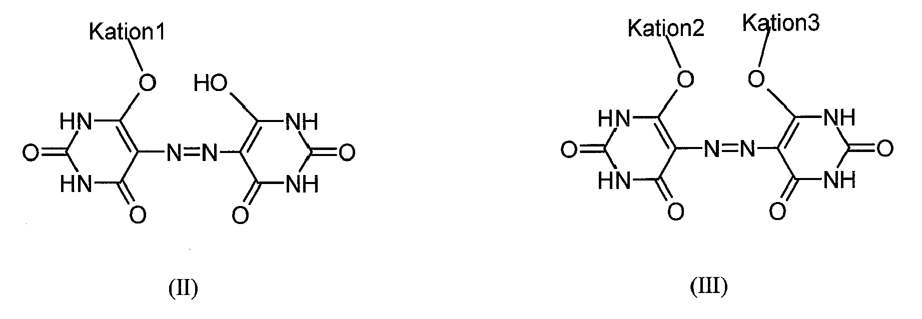 worin Kation1, Kation2 und Kation3 unabhängig voneinander für beliebige einwertige Kationen (mit Ausnahme von H) oder den Anteil eines beliebigen mehrwertigen Kations stehen, der einer positiven Ladung von eins entspricht.

Die Verbindung (I) kann neben Melamin auch ggf. weitere Verbindungen eingelagert enthalten, wie sie beispielsweise in der EP 0994162 (dort Seite 5, Zeile 40 bis Seite 7, Zeile 58) beschrieben sind. Vorzugsweise hat die Verbindung (I) zwei Einheiten Melamin eingelagert.

Als Mono-Salz der Formel (II) wird vorzugsweise das Lithium-, Natrium-, Kalium-, Magnesium-, Calcium-, Aluminium- oder Ammonium-Salz, insbesondere das Azobarbitursäure-mono-Kaliumsalz und als Di-Salz der Formel (III) vorzugsweise das gegebenenfalls auch gemischte Lithium-, Natrium-, Kalium-, Magnesium-, Calcium-, Aluminium- oder Ammonium-Salz, insbesondere das Azobarbitursäure-di-Kaliumsalz eingesetzt.

Das Azobarbitursäure-mono-Kaliumsalz der Formel (II), worin Kation1 für K⁺ steht und das Azobarbitursäure-di-Kaliumsalz der Formel (III), worin Kation2 und Kation3 jeweils für K⁺ stehen, sind aus EP-A 1 086 992 bekannt. EP-A 1 086 992 beschreibt auch ein Verfahren zur Herstellung der Verbindung (I), jedoch aus den Mono- oder Di-Salzen durch Umsetzung mit Nickelverbindungen und Melamin. Die nach den in EP 1086992 offengelegten Verfahren hergestellten Pigmente der Formel (I) sind bereits wertvolle Pigmente.

Besonders bevorzugt steht Kation1, Kation2 und Kation3 in den Formeln II und III unabhängig voneinander für ein Alkalikation, insbesondere Li-, Na- oder K-Kation, ½ Erdalkalikation, insbesondere ½ Mg, ½ Ca-Kation, 1/3 Al-Kation bzw. für gegebenenfalls mit beliebigen Resten substituiertes Ammonium-Kation, insbesondere für unsubstituiertes Ammoniumkation.

Vorzugsweise enthält diese Mischung 5 - 80 Mol-% des Di-Salzes der Formel III, insbesondere 10 - 60 Mol-%, ganz besonders bevorzugt 10 - 40 Mol-% bezogen auf die Summe aus Mono- und Di-Salz der Formel II und III.

Besonders bevorzugt steht Kation1, Kation2 und Kation3 jeweils für K^{⊕}.

Bevorzugt erzeugt man die Mischung aus dem Mono- und dem Di-Salz II und III ausgehend von dem Mono-Salz II durch Zugabe einer Kationverbindung, beispielsweise eines Oxids, Hydroxids, Carbonats, Phosphats, Hydrogenphosphats, Acetats, insbesondere durch Zugabe von Alkalihydroxid, Trialkaliphosphat oder Dialkalihydrogenphosphat, beispielsweise in Form einer Lösung oder als Feststoff, direkt aus dem Monokation-Komplex der Azobarbitursäure. Besonders bevorzugt erfolgt sie durch Zugabe einer basischen Kaliumverbindung, insbesondere durch Zugabe von Kaliumhydroxid, Trikaliumphosphat oder Dikaliumhydrogenphosphat, beispielsweise in Form einer Lösung oder auch als Feststoff.

Vorzugsweise wird die Mischung aus dem Mono- und Di-Salz II und III in einem wässrigen System bei einer Temperatur von 70 bis 100°C mit einem Nickelsalz und mit Melamin zu Verbindung (I) umgesetzt.

Vorzugsweise fällt der pH bei der Reaktion mit dem Nickelsalz unter pH 3, insbesondere auf einem Wert von pH 1 bis pH2.

Vorzugsweise wird die Reaktion zu Verbindung (I) durch ein- bis dreistündiges Nachrühren vervollständigt, insbesondere bei Temperaturen zwischen 90°C und 100°C.

Ganz besonders bevorzugt wird die Mischung aus dem Mono- und Di-Salz II und III, worin Kation 1, 2 und 3 jeweils für Kalium steht, zuerst mit einem Nickelsalz und dann mit Melamin umgesetzt.

Selbstverständlich kann man die nach dem erfindungsgemäßen Verfahren erhaltenen Pigmente durch einen Temperschritt, wie er beispielsweise in der EP A1-0994162 oder der DE 10328999 A1 beschrieben wird, nachbehandeln. Diese Nachbehandlung kann aber vorteilhaft auch ganz entfallen.

Die bei der Herstellung erhaltene Suspension wird vorzugsweise filtriert und der so erhaltene Presskuchen kann gegebenenfalls nach Waschen mit Wasser getrocknet werden.

Dabei kommen einerseits übliche Trocknungsverfahren wie die Schaufeltrocknung usw. in Frage. Mit derartigen Trocknungsverfahren und anschließender Mahlung des Pigments auf übliche Weise werden pulverförmige Pigmente erhalten.

Bevorzugt wird der Presskuchen als wässrige Slurry sprühgetrocknet. Der zu versprühende Slurry besitzt vorzugsweise einen Feststoffanteil von 10 bis 40 Gew.-%, insbesondere 15 bis 30 Gew.-%.

Bevorzugte nach dem erfindungsgemäßen Verfahren hergestellte Pigmente besitzen eine BET-Oberfläche von > 100 m²/g, vorzugsweise größer 110 m²/g, insbesondere von 115 bis 150 m²/g, die nach DIN 66131 ermittelt wurden.

Die Erfindung betrifft weiterhin ein Verfahren zur Herstellung von Pigmentpräparationen, worin wenigstens ein erfindungsgemäß hergestelltes Pigment und wenigstens ein Dispergiermittel vermischt werden. Erfindungsgemäß sind auch entsprechende Pigmentpräparationen. Diese Pigmentpräparationen dienen vorzugsweise der Einarbeitung in wässrige Systeme.

Bezüglich geeigneter Dispergiermittel kann auf den Stand der Technik verwiesen werden, insbesondere die EP-A1-0994164, Seite 8, Zeile 56 Seite 11, Zeile 23, deren Offenbarung zum Gegenstand dieser Anmeldung gehören.

Die Erfindung betrifft weiterhin einen Photolack, der wenigstens ein photohärtbares Monomer und wenigstens einen Photoinitiator und wenigstens ein nach dem erfindungsgemäßen Verfahren hergestelltes Pigment, enthält. Die Erfindung betrifft weiterhin Farbfilter und daraus hergestellte Flüssigkristallanzeigen, enthaltend wenigstens ein nach dem erfindungsgemäßen Verfahren hergestelltes Pigment.

Bei der Herstellung der Farbfilter für Flüssigkristallanzeigen wird das erfindungsgemäß hergestellte Pigment, vorzugsweise in einem organischen Lösungsmittel gegebenenfalls unter Zusatz eines Bindemittelharzes und/oder Dispergiermittels gemahlen, anschließend unter Zusatz von photohärtbaren Monomeren, Photoreaktionsstarter und ggf. weiterem Bindemittel und/oder Lösungsmittel zu einem Photolack verarbeitet, der im Anschluss daran mittels geeigneter Beschichtungsverfahren wie z.B. Roller-, Spray-, Spin-, Dip- oder Air-Knife-Coating auf ein geeignetes Substrat, im Allgemeinen eine Glasplatte aufgetragen wird, mittels Photomaske belichtet und anschließend gehärtet und zum fertigen farbigen Filter entwickelt wird.

Die Erfindung betrifft weiterhin bevorzugt die Verwendung des erfindungsgemäß hergestellten Pigments als Pigment für Farbfilter in Flüssigkristallanzeigen.

Die erfindungsgemäß hergestellte Verbindung (I), die Melamin eingelagert enthält, oder Pigmentpräparationen davon eignen sich überdies hervorragend für alle Pigmentanwendungszwecke.

Zum Beispiel eignen sie sich zum Pigmentieren von Lacken aller Art, für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wässrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden. Die nach dem erfindungsgemäßen Verfahren hergestellten Pigmente eignen sich hervorragend für Ink Jet Anwendungen und für Farbfilter für Flüssigkristallanzeigen.

### Beispiele

### Monokaliumsalz

Ausgangsmaterial für das erfindungsgemäße Verfahren ist das Beispiel 1 der EP-A 1 086 992, d.h. die α-Modifikation Azobarbitursäure Monokaliumsalz x 1 H₂O, das nachfolgend beschrieben wird.

In 810 g dest. Wasser werden 136 g Aminoguanidinbicarbonat eingetragen und mit 280 g Salzsäure (30 %ig) gelöst. Danach wird mit 780 g Eis auf ca. -10°C abgekühlt und anschließend mit 232 g einer 37 %igen Kaliumnitritlösung in Wasser bis ca. 15°C versetzt. Danach wird bei ca. 15°C 15 min nachgerührt und anschließend mit 2,0 g Amidoschwefelsäure versetzt. Danach werden 269 g Barbitursäure eingetragen, anschließend wird auf 55°C erwärmt und 2 h nachgerührt. Anschließend wird mit wässriger Kalilauge auf pH 2,5 eingestellt und 30 min nachgerührt. Danach wird mit wässriger Kalilauge auf pH 4,8 eingestellt und 30 min nachgerührt. Anschließend wird der Ansatz auf 80°C erwärmt und 3 h bei pH 4,8 nachgerührt. Danach wird auf einer Saugnutsche isoliert und elektrolytfrei gewaschen.

### Nicht-erfindungsgemäßes Vergleichs-Beispiel

425 g wasserfeuchte Paste der nach Beispiel 1 der EP-A 1 086 992 hergestellten α-Modifikation Azobarbitursäure Monokaliumsalz x 1 H₂O mit einem Trockengehalt von 40 %, entsprechend 170 g trocken (0,5mol), werden in 5000 ml destilliertem Wasser mit einem Laborrührer verrührt und auf 95°C erwärmt. 1060 g wässrige 6,5 %ige Nickelchloridlösung werden innerhalb 30 min zugesetzt. Danach werden 126 g Melamin (1mol) zugegeben und 1,5 h bei 95°C nachgerührt. Danach wird mit Kalilauge auf pH 5,5 gestellt. Anschließend wird auf einer Saugnutsche isoliert, elektrolytfrei gewaschen, bei 80°C im Vakuumtrockenschrank getrocknet und gemahlen.

Die spezifische Oberfläche wird nach DIN 66131 ermittelt: Bestimmung der spezifischen Oberfläche von Feststoffen durch Gasadsorption nach Brunauer, Emmett und Teller (B.E.T.).

Das Produkt hat eine BET-Oberfläche von 83 m²/g.

Wiederholungssynthesen zeigen erhebliche Variation (57 m²/g - 92 m²/g).

### Erfindungsgemäßes Beispiel 1

425 g wasserfeuchte Paste der nach Beispiel 1 der EP 1086992 hergestellten α-Modifikation Azobarbitursäure Monokaliumsalz x 1 H₂O mit einem Trockengehalt von 40 %, entsprechend 170 g trocken (0,5mol), werden in 5000 ml destilliertem Wasser mit einem Laborrührer verrührt und auf 95°C erwärmt.

42 g 10 %ige Kalilauge werden zugetropft (0,075 mol; 15 % bezogen auf eingesetztes Azobarbitursäure-Monokaliumsalz) und 30min nachgerührt. Dabei entsteht eine Mischung im Molverhältnis 85 Teile Monokaliumsalz und 15 Teile Dikaliumsalz. 1060 g wässrige 6,5 %ige Nickelchloridlösung werden innerhalb 30 min zugesetzt. Danach werden 126 g Melamin (1 mol) zugegeben und 1,5 h bei 95°C nachgerührt. Danach wird mit Kalilauge auf pH 5,5 gestellt. Anschließend wird auf einer Saugnutsche isoliert, elektrolytfrei gewaschen, bei 80°C im Vakuumtrockenschrank getrocknet und gemahlen.

Die spezifische Oberfläche wird nach DIN 66131 ermittelt: Bestimmung der spezifischen Oberfläche von Feststoffen durch Gasadsorption nach Brunauer, Emmett und Teller (B.E.T.).

Das Produkt hat eine BET-Oberfläche von 129 m²/g.

Wiederholungssynthesen zeigen geringe Variation (121 m²/g- 134 m²/g).

### Erfindungsgemäßes Beispiel 2

Umsetzung wie im Beispiel 1, es werden aber 28g 10%ige Kalilauge zugetropft (0,05mol; 10% bezogen auf eingesetztes Azobarbitursäure-Monokaliumsalz). Dabei entsteht eine Mischung im Molverhältnis 90 Teile Monokaliumsalz und 10 Teile Dikaliumsalz.

Das Produkt hat eine BET-Oberfläche von 126 m²/g.

Wiederholungssynthesen zeigen geringe Variation (120 m²/g- 135 m²/g).

### Erfindungsgemäßes Beispiel 3

Umsetzung wie im Beispiel 1, es werden aber 56 g 10 %ige Kalilauge zugetropft (0,1 mol; 20 % bezogen auf eingesetztes Azobarbitursäure-Monokaliumsalz). Dabei entsteht eine Mischung im Molverhältnis 80 Teile Monokaliumsalz und 20 Teile Dikaliumsalz.

Das Produkt hat eine BET-Oberfläche von 131 m²/g.

Wiederholungssynthesen zeigen geringe Variation (126 m²/g- 135 m²/g).

### Erfindungsgemäßes Beispiel 4

Umsetzung wie im Beispiel 1, es werden aber 84 g 10 %ige Kalilauge zugetropft (0,15 mol; 30 % bezogen auf eingesetztes Azobarbitursäure-Monokaliumsalz). Dabei entsteht eine Mischung im Molverhältnis 70 Teile Monokaliumsalz und 30 Teile Dikaliumsalz.

Das Produkt hat eine BET-Oberfläche von 131 m²/g.

Wiederholungssynthesen zeigen geringe Variation (131 m²/g- 144 m²/g).

### Erfindungsgemäßes Beispiel 5

Umsetzung wie im Beispiel 1, es werden aber 21,2 g Trikaliumphosphat (0,10 mol; 20 % bezogen auf eingesetztes Azobarbitursäure-Monokaliumsalz) zugegeben. Trikaliumphosphat überführt zwei Einheiten Azobarbitursäure-Monokaliumsalz in Azobarbitursäure-Dikaliumsalz und wird dabei zum Dihydrogenphosphat.

Es entsteht eine Mischung im Molverhältnis 60 Teile Monokaliumsalz und 40 Teile Dikaliumsalz.

Das Produkt hat eine BET-Oberfäche von 143 m²/g.

### Erfindungsgemäßes Beispiel 6

Umsetzung wie im Beispiel 1, es werden aber 17,4 g Dikaliumhydrogen-phosphat (0,10 mol; 20 % bezogen auf eingesetztes Azobarbitursäure-Monokaliumsalz) zugegeben. Dikaliumhydrogen-phosphat überführt eine Einheit Azobarbitursäure-Monokaliumsalz in Azobarbitursäure-Dikaliumsalz und wird dabei zum Dihydrogenphosphat.

Es entsteht eine Mischung im Molverhältnis 80 Teile Monokaliumsalz und 20 Teile Dikaliumsalz.

Das Produkt hat eine BET-Oberfäche von 124 m²/g.

## Patentansprüche

1. Verfahren zur Herstellung von Pigmenten der Formel (I) 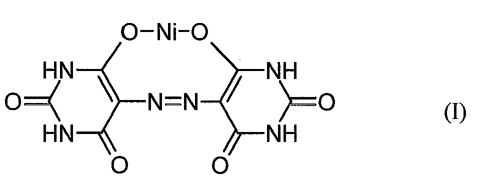 oder tautomerer Strukturen davon sowie ihre Hydrate, die Melamin eingelagert enthalten, **dadurch gekennzeichnet, dass** man eine Mischung aus dem Azobarbitursäure-mono-Kationsalz (II) und dem Azobarbitursäure-di-Kationsalz (III) mit einer Nickelverbindung und Melamin umsetzt, 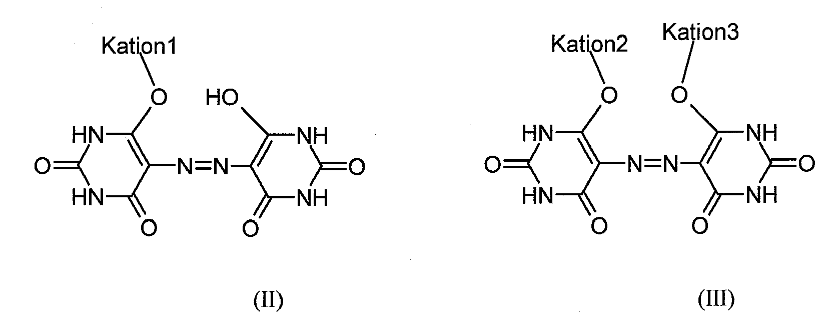 wobei Kation1, Kation2 und Kation3 nicht für H⁺ stehen und worin Kation1, Kation2 und Kation3 unabhängig voneinander für beliebige einwertige Kationen oder den Anteil eines beliebigen mehrwertigen Kations stehen, der einer positiven Ladung von eins entspricht.

2. Verfahren gemäß Anspruch 1, **dadurch gekennzeichnet, dass** Kation1, Kation2 und Kation3 in den Formeln (II) und (III) unabhängig voneinander für ein Alkalikation, insbesondere Li-, Na-, K-Kation, ½ Erdalkalikation, insbesondere ½ Mg-, ½ Ca-Kation, für 1/3 Al-Kation oder für gegebenenfalls substituiertes Ammonium-Kation, insbesondere für unsubstituiertes Ammoniumkation stehen.

3. Verfahren gemäß Anspruch 1, **dadurch gekennzeichnet, dass** Kation1, Kation2 und Kation3 jeweils für ein K-Kation stehen.

4. Verfahren gemäß Anspruch 1, **dadurch gekennzeichnet, dass** die eingesetzte Mischung 5 - 80 Gew.-% des Di-Salzes der Formel III, bezogen auf die Summe beider Salze II und III, insbesondere von 10-60 Mol-%, ganz besonders bevorzugt 10 - 40 Mol-% enthält.

5. Verfahren gemäß Anspruch 1, **dadurch gekennzeichnet, dass** die Mischung der beiden Salze II und III ausgehend vom Monosalz II durch Zugabe einer Kationverbindung, insbesondere eines Kationoxids, eines Kationhydroxids, eines Kationphosphats oder eines Kationhydrogenphosphats erzeugt wird.

6. Verfahren gemäß Anspruch 1, **dadurch gekennzeichnet, dass** die Mischung der beiden Salze II und III zuerst mit einem Nickelsalz und dann mit Melamin umgesetzt wird.

7. Verfahren gemäß Anspruch 1, **dadurch gekennzeichnet, dass** die hergestellten Pigmente eine BET-Oberfläche, ermittelt nach DIN 66131 von größer 100, insbesondere größer 110 m²/g besitzen.

8. Verfahren gemäß Anspruch 1, **dadurch gekennzeichnet, dass** man die Mischung der beiden Salze II und III bei pH < 7 mit einem Nickelsalz und Melamin umsetzt.

9. Pigmente erhältlich nach dem Verfahren gemäß Anspruch 1.

10. Verwendung der Pigmente gemäß Anspruch 9 zur Herstellung von Druckfarben, Leimfarben oder Binderfarben, für die Massefärbung von synthetischen, halbsynthetischen oder natürlich makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.

11. Verwendung der Pigmente gemäß Anspruch 9 als Pigment für die Herstellung von Laminaten, als Pigment für die Herstellung von Photolacken, als Pigment für die Herstellung von Farbfiltern in Flüssigkristallanzeigen oder als Pigment für Ink Jet Anwendungen.

12. Pigmentpräparationen enthaltend wenigstens ein Pigment gemäß Anspruch 9 und wenigstens ein Dispergiermittel.

13. Photolack, enthaltend wenigstens ein Pigment gemäß Anspruch 9, wenigstens einen Photoinitiator und ein photohärtbares Monomer.

14. Farbfilter, enthaltend wenigstens ein Pigment nach Anspruch 9.
